# EUROPÄISCHE PATENTSCHRIFT

(11) **EP 1 912 779 B1**
(45) Veröffentlichungstag und Bekanntmachung des Hinweises auf die Patenterteilung: **13.04.2011**
(21) Anmeldenummer: 06764134.0
(22) Anmeldetag: 12.07.2006
(51) Int. Cl.: B29C 65/50, B60R 16/02, C09J 7/04

(54) **VERWENDUNG EINES KLEBEBANDES MIT EINEM TRÄGER AUS EINEM SPINNVLIES, DER EINSEITIG MIT EINEM DRUCKEMPFINDLICHEN KLEBER ZUMINDEST PARTIELL BESCHICHTET IST**
USE OF AN ADHESIVE TAPE COMPRISING A SPUNBONDED BACKING ONE-SIDEDLY COATED AT LEAST PARTIALLY WITH A PRESSURE-SENSITIVE ADHESIVE
UTILISATION D'UN RUBAN ADHESIF A SUPPORT EN NON-TISSE, DONT UNE FACE EST AU MOINS PARTIELLEMENT ENDUITE D'UN ADHESIF SENSIBLE A LA PRESSION

(30) Priorität: 05.08.2005 DE 102005037663
(43) Veröffentlichungstag der Anmeldung: 23.04.2008
(73) Patentinhaber: TESA SE, 20253 Hamburg (DE)
(72) Erfinder: HOPF, Martin, 21039 Börnsen (DE)
(86) Internationale Anmeldenummer: PCT/EP2006/064122
(87) Internationale Veröffentlichungsnummer: WO 2007/017334

(56) Entgegenhaltungen:
- EP-A- 0 932 234
- WO-A-2005/039006
- DE-A1- 10 057 479
- DE-A1- 19 746 526

## Beschreibung

Die Erfindung betrifft die Verwendung eines Klebebandes mit einem Träger aus einem Spinnvlies, der einseitig mit einem druckempfindlichen Kleber zumindest partiell beschichtet ist.

Klebebänder mit einem Spinnvlies als Träger sind bekannt. Diese werden beispielsweise zur Bandagierung von Kabelbäumen eingesetzt. So beschreibt die DE 195 23 494 A1 ein Selbstklebeband zum Bandagieren von Kabelbäumen mit einem bandförmigen textilen Träger, der aus Spinnvlies besteht. Bei dem erfindungsgemäß zum Einsatz kommenden Vlies handelt es sich um ein Spinnvlies aus Polypropylen, das mit Hilfe eines Kalanders thermisch verfestigt und geprägt ist, wobei die Prägewalze eine Prägefläche von 10 % bis 30 %, bevorzugt 19 %, aufweist. Das Klebeband zeigt bei seiner Verwendung zur Kabelbaumbandagierung aufgrund seiner speziellen Ausführung gute Handreißeigenschaften und gute Abrolleigenschaften.

Mit der DE 298 04 431 U wird ebenfalls die Verwendung eines Klebebandes mit einem Träger aus Vliesmaterial zum Bandagieren von Kabelbäumen offenbart, wobei das vorgeschlagene Spinnvlies aus Polyester besteht.

Ein Verschweißen der Klebebänder mit dem Untergrund wird nicht erwähnt.

Bekannt ist eine Vielzahl unterschiedlicher Polymere, die nicht nur als Auskleidungsteile im Fahrzeugbau verwendet werden. Herstellbedingt sind die polymeren Substrate Talkum benetzt und/oder mit Trennmitteln kontaminiert, stellen somit Untergründe dar, auf denen handelsübliche Haftklebemassen nur eingeschränkt kleben beziehungsweise aufwändig vorbehandelt werden müssen.

Bekannt sind mechanische Befestigungselemente wie Schellen oder Kabelbinder zur dauerhaften Fixierung von Bauteilen wie Leitungssträngen, die ein rationelles Verlegen von Kabelbäumen, unabhängig von polymeren Substraten ermöglicht. Nachteile sind im Bereich der Geräuschdämpfung und Systemkosten zu finden.

Bekannt ist ebenfalls das Verfahren unter Ultraschallbeaufschlagung und Druck zwei polymere Substrate stoffschlüssig zu verbinden.

In der EP 0 932 234 A1 ist ein Verfahren zur Befestigung eines Bauteils auf einem Trägermaterial beschrieben. Dabei wird das Bauteil mit einem Befestigungsmittel mit einer Kontaktfläche dadurch befestigt, indem die Kontaktfläche aus einem mit dem Trägermaterial thermisch verschweißbaren Material besteht und das Befestigungsmittel durch thermisches Verschweißen der Kontaktfläche mit dem Trägermaterial befestigt wird. Dadurch werden separate Halterungselemente oder Verbindungsmittel überflüssig. Unter dem Begriff Bauteil werden kleinere Anbauteile wie Sensoren, Leuchten oder elektrische Leitungen verstanden.

Die thermisch verschweißte Fläche kann zum Beispiel ringförmig um das Bauteil herumgelegt werden, so dass das Bauteil allseitig gegen Verrutschen gesichert ist.

Einen besonderen Vorteil bietet die Erfindung für die Befestigung von elektrischen oder fluidischen Leitungen. Das Befestigungsmittel ist dann zweckmäßigerweise eine Folie, die auf auf dem Trägermaterial verlegte Leitungen gelegt wird und dann nach Art eines Heftpflasters zu beiden Seiten der Leitung thermisch verschweißt wird.

In einer weiteren bevorzugten Ausführungsform wird ein Kabelbinder mit einer zusätzlichen Kontaktfläche verwendet, die mit dem Trägermaterial verschweißbar ist. Vorzugsweise sind Trägermaterial, Kabelbinder und/oder Folie aus Polyethylen oder Polypropylen, wobei bevorzugt gleiche Materialien miteinander thermisch verschweißt werden sollten.

Unter dem Begriff Folie sind auch flächenhafte Gebilde im weiteren Sinne wie zum Beispiel Vliese, Gewebe oder dünnschichtige Platten zu verstehen.

Mit der DE 197 46 526 A1 ist ein mit reduziertem Aufwand herstellbarer Kabelbaum bekannt geworden. Der Kabelbaum ist aus einer Folie und den durch diese zusammengefassten Leitungen gebildet, wobei entweder nur die Leitungen des Hauptstranges mit einer im Wesentlichen parallel zu diesen ausgerichteten Folie zusammengefasst sind, derart, dass die Folie quer zu den Leitungen um diese geschlagen ist und in radialer Richtung abstehende und aneinander liegende Randbereiche aufweist, die miteinander verbunden sind, oder die Leitungen sowohl des Hauptstranges als auch der Abzweigung mit einer jeweils im Wesentlichen parallel zu diesen ausgerichteten Folie zusammengefasst sind, wobei die eingesetzte Folie dem Legeschema entsprechend gestaltet und erheblich breiter als die jeweils nebeneinander liegend angeordneten Leitungen ist.

Unter Folie wird dabei ein flächiges in sich homogenes flexibles Gebilde verstanden, auch Papier und textile Flächengebilde aus natürlichen und synthetischen Fasern wie Vliese und Gewebe.

Die Randbereiche können verschweißt oder verklebt werden.

Das Ultraschallschweißen ist ein Verfahren zum Fügen von Kunststoffen. Grundsätzlich können nur thermoplastische Kunststoffe geschweißt werden. Prinzipiell können aber auch Metalle geschweißt werden, was auch zum Beispiel in der Elektrotechnik bei der Verdrahtung von Mikrochips angewendet wird. Wie bei allen anderen Schweißverfahren muss an der Schweißstelle das Material durch Zuführen von Wärme aufgeschmolzen werden. Beim Ultraschallschweißen wird sie durch eine hochfrequente mechanische Schwingung erzeugt. Das Hauptmerkmal dieses Verfahrens ist, dass die zum Schweißen notwendige Wärme zwischen den Bauteilen durch Molekular- und Grenzflächenreibung in den Bauteilen entsteht. Somit gehört das Ultraschallschweißen zur Gruppe des Reibschweißens.

Das Ultraschallschweißgerät besteht im Wesentlichen aus den Baugruppen:
- Generator
- Schwinggebilde (Sonotrode)
- Amboss

Erzeugt wird die Ultraschallfrequenz mit Hilfe des Generators. Dieser wandelt die Netzspannung in eine Hochspannung und Hochfrequenz um. Durch ein geschirmtes Kabel wird die elektrische Energie zu einem Ultraschall-Wandler, dem so genannten Konverter übertragen. Der Konverter arbeitet nach dem piezoelektrischen Effekt, bei dem die Eigenschaft bestimmter Kristalle, die sich bei angelegtem elektrischen Wechselfeld ausdehnen und zusammenziehen, genutzt wird. Hierdurch entstehen mechanische Schwingungen, die über ein Amplitudentransformationsstück auf die Sonotrode (das so genannte Schweißhorn) übertragen werden. Die Amplitude der Schwingung kann durch das Amplitudentransformationsstück in ihrer Größe beeinflusst werden. Die Schwingungen werden unter Druck von 2 bis 5 N/mm² auf die zwischen der Sonotrode und einem Amboss eingespannten Werkstück übertragen, wobei durch Molekular- und Grenzflächenreibung die zum Plastifizieren notwendige Wärme erzeugt wird. Durch die örtliche Temperatur beginnt der Kunststoff zu erweichen und der Dämpfungskoeffizient steigt. Die Zunahme des Dämpfungsfaktors führt zu weiterer Wärmeerzeugung, was den Effekt einer sich selbst beschleunigenden Reaktion gewährleistet. Dieses Verfahren ist gekennzeichnet durch sehr geringe Schweißzeiten und dadurch oft hohe Wirtschaftlichkeit.

Nach dem Auskühlen ist die Schweißverbindung fest.

Da die Sonotrode dauerhaft Ultraschallschwingungen ausgesetzt ist, sind die Anforderungen an das Material sehr hoch. Meistens wird daher carbidbeschichtetes Titan eingesetzt.

Das Hochfrequenzschweißen ist ein Pressschweißverfahren unter Einwirkung von Wärme, die sich auf der Basis der ohmschen Verluste in den Fügeteilen entwickelt. Die beiden Variationen bei der Anwendung von HF-Strom in der Schweißtechnik sind die induktive und konduktive Energieeinbringung. Beim konduktiven HF-Schweißen erfolgt die Energieeinleitung über Stromschienen oder Schleifkontakten, während dies bei der induktiven Variante durch eine über den Fügeteilen liegenden Induktionsspule geschieht. Der durch elektrodynamische Effekte an den Fügeteilen fließende hochfrequente Wechselstrom erwärmt die Verbindungsstelle und durch Kraftaufbringung werden die Teile formschlüssig miteinander verbunden. Die zu verschweißenden Thermoplaste müssen einen dielektrischen Verlustfaktor von d > 0,01 besitzen

Derzeit wird das HF-Schweißen mit induktiver Energieeinbringung in der Industrie hauptsächlich zur Herstellung von Längsnahtrohren eingesetzt.

Zu den thermischen Schweißverfahren zählen neben den bereits genannten HF-Schweiß- und Ultraschallschweißverfahren unter anderem das Heißluftschweißen und das Heizstabrollerschweißen.

Aufgabe der vorliegenden Erfindung ist es, einen Gegenstand zur Verfügung zu stellen, der thermisch mit einem polymeren Untergrund verschweißt werden kann und dabei insbesondere eine sichere Verbindung selbst auf trennmittelbehafteten Oberflächen herzustellen vermag.

Gelöst wird diese Aufgabe durch die Verwendung eines Klebebands, wie es im Hauptanspruch dargelegt ist. Gegenstand der Unteransprüche sind vorteilhafte Fortbildungen des Erfindungsgegenstandes.

Demgemäß betrifft die Erfindung die Verwendung eines Klebebandes mit einem Träger aus einem Spinnvlies, der einseitig mit einem druckempfindlichen Kleber zumindest partiell beschichtet ist, in einem thermischen Schweißvorgang wie HF-Schweißen oder Ultraschallschweißen, in dem der Träger des Klebebands mit dem polymeren Untergrund eine ausgehärtete stoffschlüssige Verbindung eingeht, wobei der Kleber eine Acrylatmasse mit langen Alkylketten ist, die einen K-wert von mindestens 70 aufweist.

In einer ersten vorteilhaften Ausführungsform weist das Klebeband als Träger ein Spinnvlies aus Polyester auf, insbesondere aus Polyester- und Co-Polyesterfasern, die weiter vorzugsweise mit Hilfe eines Kalanders flächig verfestigt und/oder geprägt sind.

Der Anteil an Polyesterfasern im Träger beträgt in einer weiteren vorteilhaften Ausführungsform der Erfindung mehr als 70 Gew.-%, vorzugsweise mehr als 80 Gew.-%, und an Co-Polyesterfasern von weniger als 30 Gew.-%, vorzugsweise weniger als 20 Gew.-%.

Das Vlies weist vorteilhaft folgende Eigenschaftskombination auf:
- Vliesgewicht: 30 bis 200 g/m², vorzugsweise 70 bis 100 g/m², weiter vorzugsweise 85 g/m²
- Dicke: 250 µm bis 800 µm, vorzugsweise 500 µm bis 600 µm, weiter vorzugsweise 560 µm
- Reißdehnung: 17 bis 87 %, vorzugsweise 25 bis 40 %, weiter vorzugsweise 32%
- Reißkraft in Längsrichtung: 100 N/ 5 cm bis 400 N/5 cm, insbesondere 200 N/ 5 cm
- Reißkraft in Querrichtung: 80 N/ 5 cm bis 200 N / 5 cm, insbesondere 130 N/ 5 cm

Die Garnfeinheit, Garnstärke oder der Titer eines Garnes, einer Faser oder eines Filamentes wird in Masse pro Längeneinheit gemessen. Über die Festigkeit des Garnes oder das Volumen sagt die Garnfeinheit nichts aus.

Eine hohe Garnfeinheit bedeutet ein kleineres, ein hoher Titer ein größeres Verhältnis Masse/Länge.

Die Garnfeinheit wird international in Tex (tex) gemessen (1 tex entspricht 1 Gramm pro km).

Die Feinheit der Fasern beträgt in einer weiteren vorteilhaften Ausführungsform der Erfindung 1 bis 4,5 dtex, vorzugsweise von 2,2 dtex.

Als Kalander zur Prägung des Spinnvlieses kommt bevorzugt ein Zweiwalzenkalander, der aus mindestens einer Glattwalze und/oder einer Gravurwalze besteht, zum Einsatz. Die Gravurwalze weist dabei vorzugsweise eine Prägefläche von 10 bis 30 % auf, vorzugsweise 15 %.

Die aus der Kalanderung resultierende Muldentiefe in der Prägung des erfindungsgemäßen Trägers ist von mehreren Faktoren während des Vorganges der Kalanderung abhängig. Dabei spielen die Temperatur der Prägewalze, der auf das Spinnvlies im Spalt zwischen den Walzen ausgeübte Druck und die Geschwindigkeit, mit der das Spinnvlies den Walzenspalt passiert, eine entscheidende Rolle.

In einer alternativen Ausführung der Erfindung wird der Träger von einem Spinnvlies aus Polypropylen gebildet, das mit Hilfe eines Kalanders ebenfalls thermisch verfestigt und geprägt werden kann.

Das Vlies weist vorteilhaft folgende Eigenschaftskombination auf:
- Vliesgewicht: 30 bis 200 g/m², vorzugsweise 70 bis 100 g/m², weiter vorzugsweise 85 g/m²
- Dicke: 250 µm bis 800 µm, vorzugsweise 500 µm bis 600 µm, weiter vorzugsweise 560 µm
- Reißdehnung: 17 bis 87 %, vorzugsweise 25 bis 40 %, weiter vorzugsweise 32%
- Reißkraft in Längsrichtung: 100 N/ 5 cm bis 400 N/ 5 cm, insbesondere 200 N/ 5 cm
- Reißkraft in Querrichtung: 80 N/ 5 cm bis 200 N / 5 cm, insbesondere 130 N / 5 cm

Die Feinheit des Vlieses beträgt 2 dtex bis 7 dtex, vorzugsweise 4 dtex.

Als Kalander kommt bevorzugt ein Zweiwalzenkalander, der aus einer Glattwalze und einer Gravurwalze besteht, zum Einsatz. Die Gravurwalze weist eine Prägefläche von 10 % bis 30 % auf, vorzugsweise 19 %.

Die aus der Kalanderung resultierende Muldentiefe in der Prägung des erfindungsgemäßen Trägers ist wieder von mehreren Faktoren während des Vorgangs der Kalanderung abhängig. Dabei spielen die Temperatur der Prägewalze, der auf das Spinnvlies im Spalt zwischen den Walzen ausgeübte Druck und die Geschwindigkeit, mit der das Spinnvlies den Walzenspalt passiert, eine entscheidende Rolle. Als besonders vorteilhaft erweisen sich die folgenden Parameter für eine optimale Gestaltung des Spinnvlieses zur Weiterverarbeitung:

| | |
|---|---|
| Temperatur der Prägewalze: | 150 °C |
| Liniendruck: | 75 daN/cm |
| Fahrgeschwindigkeit: | 50 m/min |

Um dem Klebeband für den jeweiligen Einsatzzweck optimierte Eigenschaften zu geben, können den Vliesträgern während des Produktionsvorganges weitere Additive zugesetzt werden. So kann man durch die Verwendung entsprechender Farbpigmente eine bevorzugte Farbe bei den Vliesträgern erzielen. Handelsübliche UV-Stabilisatoren erhöhen die Stabilität des Klebebandes gegenüber intensiver UV-Bestrahlung zum Beispiel durch die Sonne. Besonders hervorzuheben ist bei der Verwendung des Klebebandes zur Bandagierung von Kabelbäumen die Eigenschaft, dass das Klebeband durch den Zusatz von vorzugsweise Ammoniumpolyphosphat flammfest ausgerüstet ist.

Weiter vorzugsweise ist das Spinnvlies weiß, zumindest aber hell eingefärbt. Die schmelzenden Faseranteile im Spinnvlies verschmelzen derartig mit dem polymeren Substrat, dass eine optische Bewertung über die Güte der Verschweißung erfolgen kann.

Die Messung der Eigenschaften des Spinnvliesträgers erfolgt dabei nach DIN-EN 29073-3.

Dem Spinnvliesträger können metallische Teilchen wie Metallpulver beigemengt werden, um eine induktive Wärmeentwicklung in dem Spinnvlies während des Schweißvorganges zu ermöglichen.

Das Spinnvlies ist vorzugsweise einseitig zumindest partiell mit einem druckempfindlichen Klebstoff auf Naturkautschuk- oder Acrylatbasis beschichtet, wobei dem Kleber Fasern zugesetzt sind, die in einem thermischen Schweißverfahren nicht aufschmelzen.

Die Beschichtung kann in Form eines oder mehrerer Streifen erfolgen, sie ist insbesondere aber vollflächig.

Die Beschichtung erfolgt auf Basis bekannter Verfahren wie Streich- oder Laminationsprozess.

Die Klebemasse ist physikalisch, thermisch, chemisch und/oder ESH vernetzt, vorzugsweise chemisch.

Als Klebemasse wird erfindungsgemäß eine solche auf Acrylatmasse mit langen Molekülketten eingesetzt, die einen K-Wert von mindestens 70 aufweist, insbesondere gleich 75 (gemessen jeweils in 1 Gew.-%iger Lösung in Toluol, 25 °C).

Der K-Wert wird dabei bestimmt in Analogie zu DIN 53 726.

Beispielsweise sei konkret der folgende Kleber beschrieben, der hervorragend geeignet ist.

### Polymer 1

Ein für radikalische Polymerisationen konventioneller 200 L-Reaktor wird mit 2400 g Acrylsäure, 64 kg 2-Ethylhexylacrylat, 6,4 kg N-Isopropylacrylamid und 53,3 kg Aceton/Isopropanol (95:5) befüllt. Nach 45 Minuten Durchleiten mit Stickstoffgas unter Rühren wird der Reaktor auf 58 °C hochgeheizt und 40 g 2,2'-Azoisobuttersäurenitril (AIBN) hinzugegeben. Anschließend wird das äußere Heizbad auf 75 °C erwärmt und die Reaktion konstant bei dieser Außentemperatur durchgeführt. Nach 1 h Reaktionszeit wird wiederum 40 g AIBN hinzugegeben. Nach 5 h und 10 h wird mit jeweils 15 kg Aceton/Isopropanol (95:5) verdünnt. Nach 6 und 8 h werden jeweils 100 g Dicyclohexylperoxydicarbonat (Perkadox 16®, Firma Akzo Nobel) gelöst in jeweils 800 g Aceton hinzugegeben. Die Reaktion wird nach 24 h Reaktionszeit abgebrochen und auf Raumtemperatur abgekühlt.

### Acrylathaftklebemasse 1

Das Polymer 1 wird mit Siedegrenzenbenzin 60/95 auf einen Feststoffgehalt von 30 % herunterverdünnt. Anschließend werden 25 Gew.-% (bezogen auf den Mengenanteil Polymer 1) Kolophoniumharz (Glycerylester) Foral™ 85 (Eastman Chemical) und 0,3 Gew.-% (bezogen auf den Mengenanteil Polymer 1) Aluminium-(III)-acetylacetonat (als 3 %-ige Lösung in Isopropanol) hinzugerührt und komplett gelöst.

Anschließend wird aus Lösung mit zum Beispiel einem Kommarakel auf das Substrat beschichtet und für 10 Minuten bei 120 °C getrocknet.

Die bevorzugt transparente Klebemasse ist verstärkt durch mineralische Fasern wie vorzugsweise Glaserfasern, Kohlenstofffasern und/oder Kunststofffasern, insbesondere aber Glasfasern.

Die Fasern werden der Klebemasse zu 2 bis 5 Gew.-% zugesetzt, bevorzugt 3 Gew.-%.

Die Fasern bestehen bevorzugt aus Polyvinylalkohol und weisen bevorzugt folgende Parameter auf:
- Dicke: ≥ 3 µm, vorzugsweise 5 µm bis 15 µm, besonders vorzugsweise 10 ± 1µm,
- Länge: ≥ 4 mm, vorzugsweise 4 mm bis 10 mm, besonders vorzugsweise 6 ± 1 mm,
- Dichte: 2,5 g/m³

Die Gesamtdicke der Klebstoffschicht beträgt 20 bis 200 µm, vorzugsweise 50 µm, was ein gutes Verhältnis von Isolation auf der einen Seite und Kosten auf der anderen Seite darstellt.

Die langen Molekülketten in Kombination mit den sich während des Schweißverfahrens nicht verändernden Fasern reduzieren beim Schweißen ein unkontrolliertes Auslaufen der Selbstklebemasse aus der Schweißzone und vermeiden den Reinigungsaufwand an der Sonotrode. Gleichzeitig verstärken die Fasern den stoffschlüssigen Verbund, der sich nach dem Schweißen einstellt.

Die Fasern schmelzen unter der Druck- und Ultraschalleinleitung zum Verschweißen nicht auf, so dass eine kurzzeitige Ultraschallanwendung nicht zum Auslaufen der Selbstklebemasse führt.

Um die Abrollkräfte des Klebebandes von der fertigen Rolle zu reduzieren oder ein Trennpapier zu vermeiden, kann die unbeschichtete Rückseite des Vliesträgers antiadhäsiv behandelt sein.

Ein Spinnvlies aus Polyester weist aufgrund seiner chemischen Zusammensetzung und seiner speziellen Fasermischung hervorragende Eigenschaften auf, so dass dieses als Träger in einem Klebeband eine hervorragende stoffschlüssige Verbindung zu den unterschiedlichsten polymeren Substraten einzugehen vermag, wenn es thermoplastisch, beispielsweise unter Ultraschallbeaufschlagung und Druck verschweißt wird und anschließend aushärtet.

Aufgrund der chemischen Zusammensetzung lassen sich Spinnvliese aus Polypropylen zwar nur auf chemisch ähnlichen polymeren Untergründen, sprich polyolefinen Substraten, thermisch verschweißen, dennoch führt dies zu ähnlich hervorragenden Ergebnissen wie bei den Polyesterspinnvliesen.

Darüber hinaus weisen Spinnvliese gegenüber vergleichbaren Vliesen höhere Reißkräfte in Längs- und Querrichtung auf. Somit zeigt das Klebeband in seinem bevorzugten Einsatzzweck als Befestigungsschlaufe, dass die Bauteile nicht nur unter der Belastung im Fahrbetrieb von Fahrzeugen standhalten, sondern speziell auch im Kantenbereich der Schweißnaht.

Des Weiteren zeigt die bevorzugte helle Farbe des Spinnvlieses im Bereich der Schweißnaht über die Verfärbung die Güte der Stoffschlüssigkeit an. Beim Verschweißen schmelzen die Fasern des Trägermaterials sowie der üblicherweise dunkel oder schwarz eingefärbte Untergrund (sofern es sich um einen thermoplastischen handelt) auf. Es kommt zu Diffusions- und Mischeffekten, so dass sich die geschmolzene Masse des Trägermaterials mit der Masse des Untergrunds vermengt. Dies führt zu einer Verfärbung an der Schweißstelle, sprich die sich ergebende Schweißnaht erscheint anthrazit. Wenn der thermoplastische Untergrund hingegen hell ist, bietet es sich an, das Spinnvlies schwarz auszurüsten. In diesem Falle führt der Schweißvorgang zu einer grauen Schweißnaht.

Eine hervorragende Schweißnaht zeichnet sich dadurch aus, dass diese über die gewünschte Länge eine ausreichende Breite aufweist und lückenlos dunkel oder hell verfärbt ist (quasi eine andere Farbe als das Spinnvlies beziehungsweise der Untergrund aufweist). Somit ist eine optische Kontrolle direkt bei der Verschweißung zu erkennen.

Weiter weist das Klebeband aufgrund seiner bevorzugten Prägung eine hervorragende Dämpfungseigenschaft auf. Diese ist auf den besonderen Aufbau des geprägten Trägers mit hoch verdichteten flachen und weniger stark verdichteten und besonders flexiblen Anteilen zurückzuführen. Somit kombiniert das Klebeband in seinem Einsatzzweck als Befestigungsschlaufe sowohl hervorragende Reißeigenschaften als auch besondere Dämpfungseigenschaften.

Das Klebeband wird zum thermischen Verschweißen wie HF-Schweißen oder Ultraschallschweißen von Bauteilen verwendet, und zwar insbesondere zum Verschweißen von Kabeln oder Kabelbäumen im Automobilbereich.

Dabei wird das Bauteil von dem Klebeband partiell oder vollständig umgeben, so dass das Bauteil mit der Klebebeschichtung in Kontakt steht. Das Bauteil kann auf der Kontaktfläche, auf der das Klebeband letztlich durch den Schweißvorgang fixiert wird, durch die Klebebeschichtung des Klebebands selbst befestigt werden.

Die Kontaktfläche besteht aus einem mit dem Trägermaterial thermisch verschweißbaren Material, und das Klebeband wird durch thermisches Verschweißen der Kontaktfläche mit demselben befestigt. Dadurch wird gleichzeitig das Bauteil auf der Kontaktfläche fixiert. Da ein thermisches Verschweißen auch über eine gewisse Entfernung hin möglich ist, ist die fertigungstechnische Zugänglichkeit des Bauteils weniger kritisch, was die Durchführung des Verfahrens mit Schweißautomaten vereinfacht.

Vorzugsweise wird das Bauteil, wobei hierbei wieder insbesondere der Kabelbaum gemeint ist, radial vollständig vom Klebeband umschlossen, so dass das Bauteil allseitig gegen Verrutschen gesichert ist. Des Weiteren kann so das Klebeband ein abstehendes Fähnchen ausbilden, beispielsweise indem die offenen Enden des Klebebands mit der Klebeseite aufeinander gepresst werden. Diese Fähnchen kann anschließend verschweißt werden.

Der besondere Vorteil des thermischen Verschweißens liegt darin, dass auf separate Befestigungsmittel oder Verbindungsmittel verzichtet werden kann. Auf der anderen Seite steht eine ausreichend große Schweißfläche zur sicheren Befestigung zur Verfügung, gleichzeitig kann aber die Gefahr einer thermischen und/oder mechanischen Beschädigung der zu verschweißenden Teile reduziert werden, da diese und die Schweißfläche ausreichend voneinander beabstandet sind.

Das besondere des erfindungsgemäßen Verfahrens ist, dass in dem Klebeband zwei völlig verschiedene Verbindungstechniken vereint sind, nämlich auf der dem Untergrund (zum Beispiel Dachhimmel oder Türinnenverkleidung) zugewandten Seite eine - vorzugsweise durch Ultraschallanwendung bewirkte - Schweißverbindung und auf der anderen, dem Anbauteil (zum Beispiel Kabelbaum) zugewandten Seite eine Verbindung mittels Haftklebstoff.

Diese Kombination war bisher ungangbar, weil Haftklebstoffe nicht die Einbringung hoher Temperaturen vertragen; die meisten verliefen unkontrolliert und büßten durch fortschreitende Polymerisation und/oder Lösungsmittelverlust an Klebrigkeit ein. Dieses Problem erschien zwar durch Übergang auf eine Energiezufuhr durch Ultraschalleinleitung zunächst ausreichend milderbar zu sein, weil diese Art der Energieeinbringung die Wärmeeinflusszone überraschend genau auf die zu schweißende Fläche selber zu konzentrieren vermag, scheiterte dann aber daran, dass die für die Einleitung der mechanischen Schwingungsenergie erforderliche Druckausübung der Sonotrode die mechanisch in Reihe geschaltete Klebefläche ebenfalls auf Druck belastete und die Klebmasse seitlich herausdrückte.

Erst die erfindungsgemäß vorgeschlagenen langen Molekülketten in Kombination mit den bevorzugten sich während des Schweißverfahrens nicht verändernden Fasern in der Klebemasse reduzieren beim Schweißen ein unkontrolliertes Auslaufen der Selbstklebemasse aus der Schweißzone und vermeiden den Reinigungsaufwand an der Sonotrode. Gleichzeitig verstärken die Fasern den stoffschlüssigen Verbund, der sich nach dem Schweißen einstellt.

Anhand der nachfolgend beschriebenen Figuren wird die Erfindung näher erläutert, ohne damit diese unnötig einschränken zu wollen.

Es zeigen
- Figur 1: das Klebeband im seitlichen Schnitt und
- Figur 2: einen Querschnitt durch einen Kabelbaum, der vom erfindungsgemäßen Klebeband radial ummantelt ist, wobei das Klebeband mit einem Untergrund thermisch verschweißt wird, also erfindungsgemäß eingesetzt wird.

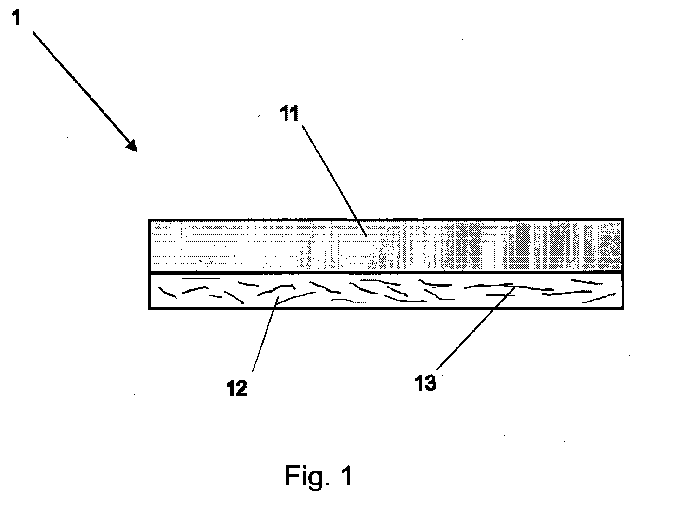

In der Figur 1 ist das Klebeband 1 im seitlichen Schnitt gezeigt. Das Klebeband 1 weist einen Spinnvliesträger 11 auf, der unterseitig mit einer Klebebeschichtung 12 versehen ist. In der Klebebeschichtung 12 sind Glasfasern 13 verteilt.

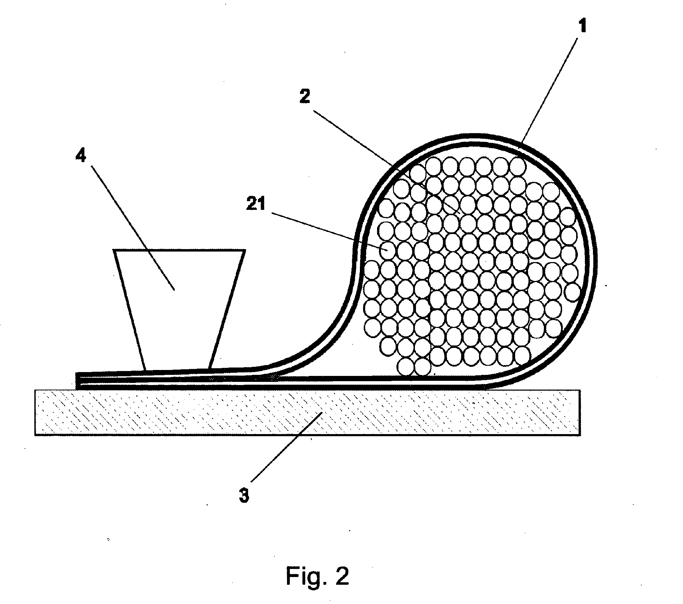

In der Figur 2 ist ein Querschnitt durch einen Kabelbaum 2 dargestellt, der vom Klebeband 1 radial ummantelt ist, wobei das Klebeband 1 mit einem Untergrund 3 thermisch verschweißt ist.

Der Kabelbaum 2 umfasst eine Vielzahl von einzelnen Leitungen 21, die von dem Klebeband 1 vollständig umschlungen sind, und zwar derart, dass sich die Klebebeschichtung 12 des Klebebands 1 innenwärts befindet. Die Klebebeschichtung ist also in Kontakt mit den Leitungen 21.

Die Enden des Klebebands 1 sind aufeinander verklebt und bilden eine so genannte Fahne 5. Diese Fahne 5 wird mit dem gewünschten Untergrund 3, beispielsweise einem Dachhimmel in einem Kraftfahrzeug, thermisch verschweißt, insbesondere mittels Ultraschall. Hierzu wird die Sonotrode 4 auf das Fähnchen 5 mit Druck aufgesetzt und liefert die für den Schweißvorgang erforderliche Energie.

Da es sich beim Dachhimmel um ein Auskleidungsteil eines Kraftfahrzeuges handelt, erfolgt die Verschweißung auf der der Fahrzeugkarosserie zugewandten Seite. Da die Befestigung vom Fahrzeuginnenraum nicht sichtbar ist, können optische Beeinträchtigungen der Befestigung in Kauf genommen werden.

Die Werkstoffe des Klebebandträgers 11 sowie des Untergrunds 3 sind derart zueinander ausgewählt, dass diese miteinander thermisch verschweißbar sind. Als mögliche Werkstoffe kommen beispielsweise Polyethylen, Polypropylen, Polyamid oder Polyvinylchlorid in Frage. Vorzugsweise wird der gleiche Werkstoff verwendet, wobei es jedoch aufgrund anderer Erwägungen für die Fertigung zweckmäßig sein kann, verschiedene Werkstoffe zu benutzen.

## Patentansprüche

1. Verwendung eines Klebebandes mit einem Träger aus einem Spinnvlies, der einseitig mit einem druckempfindlichen Kleber zumindest partiell beschichtet ist, in einem thermischen Schweißvorgang wie HF-Schweißen oder Ultraschallschweißen, in dem der Träger des Klebebands mit dem polymeren Untergrund eine ausgehärtete stoffschlüssige Verbindung eingeht, wobei der Kleber eine Acrylatmasse mit langen Molekülketten ist, die einen K-Wert von mindestens 70 aufweist, gemessen in 1 Gew-% iger Lösung in Toluol, 25°C gemäß DIN 53726.

2. Verwendung nach Anspruch 1, **dadurch gekennzeichnet, dass** das Spinnvlies aus Polyester besteht, insbesondere aus Polyester- und Co-Polyesterfasern, die weiter vorzugsweise mit Hilfe eines Kalanders flächig verfestigt und/oder geprägt sind.

3. Verwendung nach Anspruch 2, **dadurch gekennzeichnet, dass** das Polyesterspinnvlies folgende Eigenschaftsparameter aufweist.
Vliesgewicht: 30 bis 200 g/m², vorzugsweise 70 bis 100 g/m², weiter vorzugsweise 85 g/m²
Dicke: 250 µm bis 800 µm, vorzugsweise 500 µm bis 600 µm, weiter vorzugsweise 560 µm
Reißdehnung: 17 bis 87 %, vorzugsweise 25 bis 40 %, weiter vorzugsweise 32%
Reißkraft in Längsrichtung: 100 N/ 5 cm bis 400 N/ 5 cm, insbesondere 200 N/ 5 cm
Reißkraft in Querrichtung: 80 N/ 5 cm bis 200 N / 5 cm, insbesondere 130 N/ 5 cm

4. Verwendung nach Anspruch 1, **dadurch gekennzeichnet, dass** das Vlies ein Spinnvlies aus Polypropylen ist, das mit Hilfe eines Kalanders thermisch verfestigt und geprägt ist.

5. Verwendung nach Anspruch 4, **dadurch gekennzeichnet, dass** das Polypropylenspinnvlies folgende Eigenschaftsparameter aufweist.
Vliesgewicht: 30 bis 200 g/m², vorzugsweise 70 bis 100 g/m², weiter vorzugsweise 85 g/m²
Dicke: 250 µm bis 800 µm, vorzugsweise 500 µm bis 600 µm, weiter vorzugsweise 560 µm
Reißdehnung: 17 bis 87 %, vorzugsweise 25 bis 40 %, weiter vorzugsweise 32%
Reißkraft in Längsrichtung: 100 N/ 5 cm bis 400 N/ 5 cm, insbesondere 200 N/ 5 cm
Reißkraft in Querrichtung: 80 N/ 5 cm bis 200 N / 5 cm, insbesondere 130 N/ 5 cm

6. Verwendung nach zumindest einem der vorherigen Ansprüche, **dadurch gekennzeichnet, dass** dem Vliesträger ein oder mehrere Additive wie Pigmente, UV-Stabilisatoren, Flammschutzmittel zugesetzt sind.

7. Verwendung nach zumindest einem der vorherigen Ansprüche, **dadurch gekennzeichnet, dass** der Vliesträger durch den Zusatz von Farbpigmenten hell oder insbesondere weiß eingefärbt ist.

8. Verwendung nach zumindest einem der vorherigen Ansprüche, **dadurch gekennzeichnet, dass** der Kleber auf Acrylat basiert und dem Kleber Fasern zugesetzt sind, die in dem thermischen Schweißverfahren nicht aufschmelzen.

9. Verwendung nach zumindest einem der vorherigen Ansprüche, **dadurch gekennzeichnet, dass** die Klebebeschichtung durch mineralische Fasern wie vorzugsweise Glaserfasern, Kohlenstofffasern und/oder Kunststofffasern, insbesondere aber Glasfasern verstärkt ist.

10. Verwendung nach zumindest einem der vorherigen Ansprüche, **dadurch gekennzeichnet, dass** die Fasern der Klebemasse zu 2 bis 5 Gew.-% zugesetzt werden.

11. Verwendung nach zumindest einem der vorherigen Ansprüche, **dadurch gekennzeichnet, dass** die Fasern aus Polyvinylalkohol bestehen und insbesondere folgende Parameter aufweisen:
Dicke: ≥ 3 µm, vorzugsweise 5 µm bis 15 µm, besonders vorzugsweise 10 ± 1 µm,
Länge: ≥ 4 mm, vorzugsweise 4 mm bis 10 mm, besonders vorzugsweise 6 ± 1 mm,
Dichte: 2,5 g/m³

12. Verwendung nach zumindest einem der vorherigen Ansprüche, **dadurch gekennzeichnet, dass** die Klebebeschichtung eine Gesamtdicke von 20 bis 200 µm aufweist.

13. Verwendung nach zumindest einem der vorherigen Ansprüche, **dadurch gekennzeichnet, dass** die Klebebeschichtung transparent ist.

14. Verwendung nach zumindest einem der vorherigen Ansprüche, **dadurch gekennzeichnet, dass** die Rückseite des Vliesträgers antiadhäsiv behandelt ist.

15. Venuendung nach zumindest einem der vorherigen Ansprüche zum thermischen Verschweißen eines mit dem Klebeband ummantelten Kabelbaums in einem Kraftfahrzeug.

## Claims

1. Use of an adhesive tape comprising a spunbonded backing one-sidedly coated at least partially with a pressure-sensitive adhesive, in a thermal welding operation such as HF welding or ultrasonic welding on the polymeric substrate, in which the backing of the adhesive tape enters into a cured physical connection with the polymeric substrate, the adhesive being an acrylate composition with long molecular chains, which has a K value of at least 70, measured in 1% strength by weight solution in toluene, 25°C according to DIN 53726.

2. Use according to Claim 1, **characterized in that** the spunbonded is composed of polyester, more particularly of polyester fibers and co-polyester fibers, which more preferably have been surface-consolidated and/or embossed by means of a calender.

3. Use according to Claim 2, **characterized in that** the polyester spunbonded has the following property parameters:
web weight: 30 to 200 g/m², preferably 70 to 100 g/m², more preferably 85 g/m²
thickness: 250 µm to 800 µm, preferably 500 µm to 600 µm, more preferably 560 µm
breaking elongation:17% to 87%, preferably 25% to 40%, more preferably 32%
machine-direction breaking strength: 100 N/5 cm to 400 N/5 cm, more particularly 200 N/5 cm
cross-direction breaking strength: 80 N/5 cm to 200 N/5 cm, more particularly 130 N/5 cm.

4. Use according to Claim 1, **characterized in that** the web is a polypropylene spunbonded which has been thermally consolidated and embossed by means of a calender.

5. Use according to Claim 4, **characterized in that** the polypropylene spunbonded has the following property parameters:
web weight: 30 to 200 g/m², preferably 70 to 100 g/m², more preferably 85 g/m²
thickness: 250 µm to 800 µm, preferably 500 µm to 600 µm, more preferably 560 µm
breaking elongation:17% to 87%, preferably 25% to 40%, more preferably 32%
machine-direction breaking strength: 100 N/5 cm to 400 N/5 cm, more particularly 200 N/5 cm
cross-direction breaking strength: 80 N/5 cm to 200 N/5 cm, more particularly 130 N/5 cm.

6. Use according to at least one of the preceding claims, **characterized in that** the web backing has been admixed with one or more additives such as pigments, UV stabilizers, flame retardants.

7. Use according to at least one of the preceding claims, **characterized in that** the web backing has been given a pale or, more particularly, white coloration through the addition of color pigments.

8. Use according to at least one of the preceding claims, **characterized in that** the adhesive is based on acrylate and the adhesive has been admixed with fibers which do not melt in the thermal welding process.

9. Use according to at least one of the preceding claims, **characterized in that** the adhesive coating is reinforced by mineral fibers such as preferably glass fibers, carbon fibers and/or polymeric fibers, but more particularly glass fibers.

10. Use according to at least one of the preceding claims, **characterized in that** the fibers are added to the adhesive at 2% to 5% by weight.

11. Use according to at least one of the preceding claims, **characterized in that** the fibers are composed of polyvinyl alcohol and more particularly have the following parameters:
thickness: ≥ 3 µm, preferably 5 µm to 15 µm, with particular preference 10 ± 1 µm,
length: ≥ 4m, preferably 4 mm to 10 mm, with particular preference 6 ± 1 mm,
density: 2.5 g/m³.

12. Use according to at least one of the preceding claims, **characterized in that** the adhesive coating has a total thickness of 20 to 200 µm.

13. Use according to at least one of the preceding claims, **characterized in that** the adhesive coating is transparent.

14. Use according to at least one of the preceding claims, **characterized in that** the reverse of the web backing has been given an antiadhesive treatment.

15. Use according to at least one of the preceding claims for thermal welding of a cable harness wrapped with the adhesive tape in a motor vehicle.

## Revendications

1. Utilisation d'une bande adhésive présentant un support en un tissu non tissé, qui est revêtu sur une face au moins partiellement d'un adhésif sensible à la pression, dans un processus de soudage thermique tel que la soudure HF ou la soudure aux ultrasons, au cours duquel le support de la bande adhésive forme un assemblage par fusion des matériaux, durci avec le substrat polymère, l'adhésif étant une masse d'acrylate avec des longues chaînes moléculaires, qui présente une valeur K d'au moins 70, mesurée dans une solution à 1% en poids dans du toluène, à 25°C selon la norme DIN 53726.

2. Utilisation selon la revendication 1, **caractérisée en ce que** le tissu non tissé est constitué de polyester, en particulier de fibres de polyester et de copolyester, qui sont en outre de préférence consolidées et/ou gaufrées en surface à l'aide d'une calandreuse.

3. Utilisation selon la revendication 2, **caractérisée en ce que** le tissu non tissé en polyester présente les paramètres de propriété suivantes :
Poids du non-tissé : 30 à 200 g/m², de préférence 70 à 100 g/m², plus préférablement 85 g/m²
Epaisseur : 250 µm à 800 µm, de préférence 500 µm à 600 µm, plus préférablement 560 µm
Allongement à la rupture :17 à 87%, de préférence 25 à 40%, plus préférablement 32%
Résistance à la déchirure dans le sens longitudinal : 100 N/5 cm à 400 N/5 cm, en particulier 200 N/5 cm
Résistance à la déchirure dans le sens transversal : 80 N/5 cm à 200 N/5 cm, en particulier 130 N/5 cm.

4. Utilisation selon la revendication 1, **caractérisée en ce que** le non-tissé est un tissu non tissé en polypropylène, qui est consolidé et gaufré thermiquement à l'aide d'une calandreuse.

5. Utilisation selon la revendication 4, **caractérisée en ce que** le tissu non tissé en polypropylène présente les paramètres de propriété suivantes :
Poids du non-tissé : 30 à 200 g/m², de préférence 70 à 100 g/m², plus préférablement 85 g/m²
Epaisseur : 250 µm à 800 µm, de préférence 500 µm à 600 µm, plus préférablement 560 µm
Allongement à la rupture :17 à 87%, de préférence 25 à 40%, plus préférablement 32%
Résistance à la déchirure dans le sens longitudinal : 100 N/5 cm à 400 N/5 cm, en particulier 200 N/5 cm
Résistance à la déchirure dans le sens transversal : 80 N/5 cm à 200 N/5 cm, en particulier 130 N/5 cm.

6. Utilisation selon au moins l'une quelconque des revendications précédentes, **caractérisée en ce que** le support en non-tissé est additionné d'un ou de plusieurs additifs tels que les pigments, les stabilisateurs aux UV, les agents ignifuges.

7. Utilisation selon au moins l'une quelconque des revendications précédentes, **caractérisée en ce que** le support en non-tissé est teinté en clair ou en particulier en blanc par l'addition de pigments colorés.

8. Utilisation selon au moins l'une quelconque des revendications précédentes, **caractérisée en ce que** l'adhésif est à base d'acrylate et l'adhésif est additionné de fibres qui ne fondent pas dans le procédé de soudage thermique.

9. Utilisation selon au moins l'une quelconque des revendications précédentes, **caractérisée en ce que** le revêtement adhésif est renforcé par des fibres minérales, telles que de préférence des fibres de verre, des fibres de carbone et/ou des fibres en matériau synthétique, en particulier cependant des fibres de verre.

10. Utilisation selon au moins l'une quelconque des revendications précédentes, **caractérisée en ce que** les fibres sont ajoutées à la masse adhésive à raison de 2 à 5% en poids.

11. Utilisation selon au moins l'une quelconque des revendications précédentes, **caractérisée en ce que** les fibres sont constituées par du poly(alcool vinylique) et présentent en particulier les paramètres suivantes :
Epaisseur : ≥ 3 µm, de préférence 5 µm à 15 µm, de manière particulièrement préférée 10 ± 1 µm,
Longueur : ≥ 4 mm, de préférence 4 mm à 10 mm, de manière particulièrement préférée 6 ± 1 mm,
Densité : 2,5 g/m³.

12. Utilisation selon au moins l'une quelconque des revendications précédentes, **caractérisée en ce que** le revêtement adhésif présente une épaisseur totale de 20 à 200 µm.

13. Utilisation selon au moins l'une quelconque des revendications précédentes, **caractérisée en ce que** le revêtement adhésif est transparent.

14. Utilisation selon au moins l'une quelconque des revendications précédentes, **caractérisée en ce que** la face arrière du support en non-tissé est traité de manière antiadhésive.

15. Utilisation selon au moins l'une quelconque des revendications précédentes pour le soudage thermique d'un faisceau de câbles enveloppé par la bande adhésive dans un véhicule à moteur.
